Europäisches Patentamt

European Patent Office

Office européen des brevets

(19)

(11) Veröffentlichungsnummer: **0 150 477**
A2

(12) # EUROPÄISCHE PATENTANMELDUNG

(21) Anmeldenummer: **84116131.8**

(22) Anmeldetag: **21.12.84**

(51) Int. Cl.⁴: **G 01 K 7/22**

(30) Priorität: **13.01.84 DE 3400963**

(43) Veröffentlichungstag der Anmeldung: **07.08.85**
**Patentblatt 85/32**

(84) Benannte Vertragsstaaten: **DE FR GB IT NL SE**

(71) Anmelder: **VDO Adolf Schindling AG, Gräfstrasse 103, D-6000 Frankfurt/Main (DE)**

(72) Erfinder: **Hauschild, Wolfgang, Taunusstrasse 44, D-6237 Liederbach (DE)**

(74) Vertreter: **Klein, Thomas, Dipl.-Ing. (FH), Sodener Strasse 9 Postfach 6140, D-6231 Schwalbach a. Ts. (DE)**

(54) **Temperaturgeber.**

(57) Ein Temperaturgeber hat ein temperaturabhängiges Meßelement (7) in Form einer Scheibe. Dieses Meßelement (7) sitzt auf einer Isolierschicht auf, die durch einen Keramikkörper (4) gebildet ist. Der Keramikkörper (4) dichtet eine Öffnung (3) im Boden (2) des Gebergehäuses (1) ab. Er ist vorzugsweise zumindest an seiner unteren Seite mit einer metallisierten Schicht (6) versehen und mit dem Rand des Bodens (2) des Gebergehäuses (1) verlötet.

Durch diese Öffnung (3) kann Wärme aus dem zu messenden Medium unmittelbar über den Keramikkörper (4) in das Meßelement (7) gelangen, so daß der Temperaturgeber trägheitsarm ist und sehr genau mißt.

VDO Adolf Schindling AG               Gräfstraße 103
                                      6000 Frankfurt/Main
                                      G-R Kl-kmo  / 1755
                                      10. Januar 1984


Temperaturgeber


Die Erfindung bezieht sich auf einen Temperaturgeber mit einem temperaturabhängigen Meßelement in Form einer Scheibe, Pille oder dergleichen, das unter Zwischenschaltung einer Isolierschicht am Boden eines rohrförmigen Gebergehäuses angeordnet und mittels zweier Leiter mit zwei Anschlußkontakten des Temperaturgebers verbunden ist. Temperaturgeber dieser Art werden zur Zeit zur Messung und Überwachung der Motortemperatur von Kraftfahrzeugen eingesetzt und sind daher bekannt.

Bei dem bekannten Temperaturgeber liegt ein Widerstandselement auf einer Keramikscheibe auf, die ihrerseits auf dem Boden des Gebergehäuses angeordnet ist. Zwischen der Keramikscheibe und dem Widerstandselement greift eine Kontaktfahne, von der aus eine Leiterbahn nach oben zu einem Anschlußkontakt des Temperaturgebers führt. Von einem anderen Anschlußkontakt wird elektrische Energie dem Heißleiter über eine Druckfeder zugeführt, die sich auf der der Kontaktfahne abgewandten Seite des Temperaturgebers abstützt. Es han-

- 2 -

delt sich also bei dem vorbekannten Temperaturgeber
um einen massefreien Geber.
Das Gebergehäuse ist bei dem bekannten Temperaturgeber aus Metall gefertigt. Es leitet deshalb Wärme
sehr gut. Dadurch wird ein Teil der Wärme, die das
Widerstandselement beeinflussen soll, durch das Gebergehäuse abgeleitet. Hiervon abgesehen, treten
beim Wärmeübergang durch das Gehäuse und durch die
Keramikplatte Wärmeverluste auf, durch die der Temperaturgeber träge wird.

Der Erfindung liegt die Aufgabe zugrunde, einen Temperaturgeber der eingangs genannten Art so zu gestalten, daß er möglichst genau mißt und bei Temperaturänderungen rasch anspricht.

Diese Aufgabe wird erfindungsgemäß dadurch gelöst,
daß im Boden des Gebergehäuses eine von der das Meßelement tragenden Isolierschicht dichtend abgedeckte
Öffnung vorgesehen ist.

Durch diese erfindungsgemäße Gestaltung wird erreicht,
daß die Wärme des Meßmediums nicht erst in das Gebergehäuse gelangen muß, bevor sie das Meßelement beeinflußen kann, sondern unmittelbar durch die Öffnung
und die Isolierschicht zum Meßelement fließt. Dadurch
hat der Temperaturgeber eine geringe Trägheit.
Weiterhin wird das Meßergebnis durch über das Gebergehäuse abfließende Wärme nur vernachlässigbar wenig
verfälscht.

- 3 -

- 3 -

Eine vorteilhafte Ausgestaltung der Erfindung besteht darin, daß die Isolierschicht ein Keramikkörper ist, der auf seiner die Öffnung abdeckenden Seite eine Metallschicht hat. Durch diese metallisierte Schicht wird der Keramikkörper versiegelt, so daß der Temperaturgeber völlig dicht wird und keine Fremdstoffe aus dem zu messenden Medium in das Innere des Temperaturgebers hineindiffundieren können.

Günstig ist es auch, wenn der Keramikkörper in den Boden des Gebergehäuses eingelötet ist. Durch dieses Löten ist die dichtende Verbindung des Keramikkörpers am Boden des Gebergehäuses besonders einfach zu erzeugen. Lötpaste kann beispielsweise auf den Keramikkörper aufgebracht und der Temperaturgeber anschließend durch einen Ofen gefahren werden, wobei das Lötmittel flüssig wird und die Versiegelung des Keramikkörpers sowie die Verbindung mit dem Boden des Gebergehäuses erfolgt.

Eine konstruktiv besonders vorteilhafte Ausführungsform ist im Anspruch 4 angegeben. Bei ihr ist das Meßelement von beiden Seiten her über jeweils eine Druckfeder mit der Meßspannung verbunden. Der Temperaturgeber ist dadurch sehr einfach im Aufbau und leicht zu montieren.

Vorteilhafterweise wird das Meßelement schon vor dem Einbau in das Gebergehäuse auf der metallisierten Schicht des Keramikkörpers festgelötet, so daß eine

- 4 -

- 4 -

widerstandsarme Verbindung entsteht.

Eine alternative Ausführungsform zu der vorbeschriebenen besteht darin, daß die Isolierschicht durch eine Folie gebildet ist, welche mit einem Bodenbereich die Öffnung abdeckt und mit einem Fortsatz innenseitig am Gebergehäuse hochgezogen ist, und daß ein Leiter durch einen metallisierten Bereich der Folie gebildet ist, auf dem das Meßelement aufsitzt und der zu einem Anschlußkontakt führt. Bei dieser Ausführungsform ersetzt eine billig herzustellende Folie mit einem metallisierten Bereich entweder eine Druckfeder zur Spannungszufuhr oder die bei anderen Temperaturgebern verwendeten Kontaktfahnen. Der erfindungsgemäß Temperaturgeber wird deshalb ganz besonders billig herstellbar. Um die Öffnung zuverlässig dicht abzuschließen ist es vorteilhaft, die Folie mit dem Rand der Öffnung zu verkleben.

Möglich ist es auch, statt eines Keramikkörpers oder der Folie eine zumindest außenseitig emaillierte Metallscheibe zu verwenden. Das Emaille bildet dann die Isolierschicht.

Die Erfindung läßt zahlreiche Ausführungsmöglichkeiten zu. Zur Verdeutlichung ihres Grundprinzipes sind zwei davon stark schematisiert in der Zeichnung dargestellt und werden nachfolgend beschrieben. Für ein Verständnis der Erfindung nicht unbedingt erforder-

- 5 -

liche Einzelteile, wie beispielsweise die Kontaktfahnen oder die elektronische Schaltung, wurden
weggelassen. Die Zeichnung zeigt in

Figur 1    einen Längsschnitt durch den unteren Teil einer ersten Ausführungsform eines erfindungsgemäß gestalteten Temperaturgebers,

Figur 2    einen Längsschnitt durch eine zweite Ausführungsform des unteren Teils
eines erfindungsgemäßen Temperaturgebers,

Figur 3    eine Ansicht auf eine im Temperaturgeber gemäß Figur 2 vorgesehene Folie.

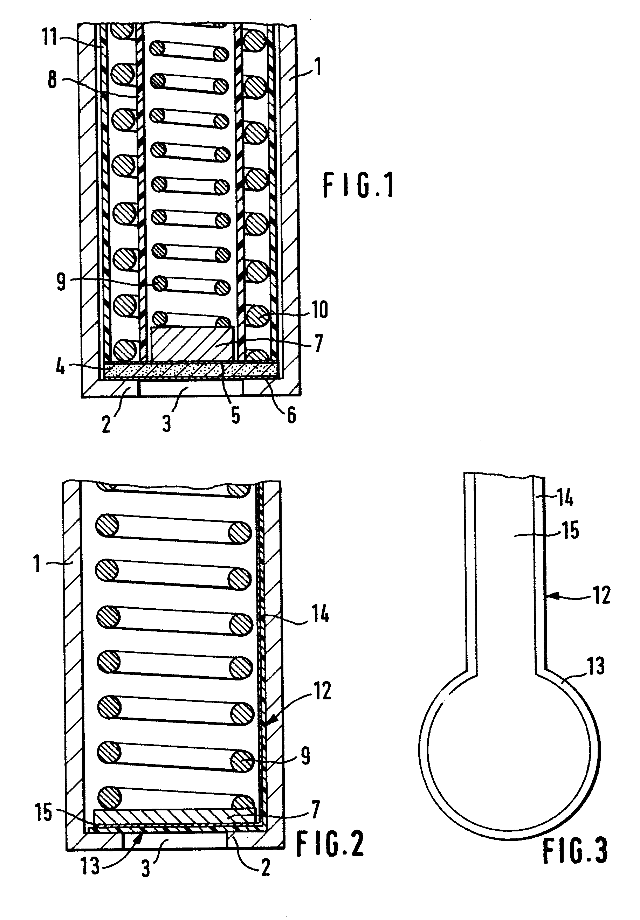

Die Figur 1 zeigt einen Temperaturgeber, der ein rohrförmiges Gebergehäuse 1 hat. Dieses Gebergehäuse 1
hat einen Boden 2, in dem eine Öffnung 3 vorgesehen
ist. Diese Öffnung 3 ist gebergehäuseinnenseitig
durch eine Isolierschicht in Form eines Keramikkörpers 4 abgedeckt. Der Keramikkörper 4 hat auf seinen
beiden Stirnseiten jeweils eine dünne metallisierte
Schicht 5, 6. Durch Löten ist eine dichte Verbindung
zwischen der metallisierten Schicht 6 und dem Boden 2
des Gebergehäuses 1 erzeugt.

Auf der innenseitigen metallisierten Schicht 5 des Keramikkörpers 4 sitzt ein Meßelement 7, bei dem es sich vorzugsweise um einen Heißleiter (NTC) handelt.
Natürlich kann die Erfindung auch mit einem Kaltleiter (PTC) als Meßelement 7 verwirklicht werden. Das Meßelement 7 ist im Durchmesser kleiner
als der Keramikkörper 4 und wird von einem Isolierrohr 8 umfaßt. Im Isolierrohr 8 ist eine Druckfeder 9 angeordnet, die auf der oberen Stirnfläche
des Meßelementes 7 aufliegt und über die eine
Seite des Meßelementes 7 mit der Meßspannung verbunden ist.

Die andere Seite des Meßelementes 7 hat Verbindung
mit der Meßspannung über eine zweite Druckfeder 10,
welche außerhalb des Isolierrohres 8 auf der oberen metallisierten Schicht 5 des Keramikkörpers 4
aufsitzt und durch ein zweites durchmessergrößeres
Isolierrohr 11 gegenüber dem Gebergehäuse 1 isoliert ist.

Zum Messen fließt elektrischer Strom durch die
Druckfeder 9 über das Meßelement 7 und die Druckfeder 10. Die über die Öffnung 3 und dem Keramikkörper 4 auf das Meßelement 7 einwirkende Temperatur verändert den elektrischen Widerstand des Meßelementes 7, so daß sein Stromdurchfluß sich verändert, was auf einfache Weise gemessen werden kann.

- 7 -

Bei der Ausführungsform gemäß den Figuren 2 und 3
ist das Gebergehäuse 1 genau wie bei der Ausführungsform gemäß Figur 1 gestaltet und hat ebenfalls im Boden 2 eine Öffnung 3. Diese Öffnung 3
ist jedoch nicht durch einen Keramikkörper, sondern von einer Folie 12 abgedeckt, die mit dem
Rand der Öffnung 3 verklebt ist, so daß kein Meßmedium durch die Öffnung 3 in das Innere des Gebergehäuses 1 gelangen kann.

Die Figur 3 zeigt die Gestaltung der Folie 12 genauer. Diese hat einen Bodenbereich 13, der die
Öffnung 3 abdeckt und einen an der Innenmantelfläche des Gebergehäuses 1 hochgezogenen Fortsatz 14.
Sowohl auf dem Bodenbereich 13 als auch auf dem
Fortsatz 14 ist ein metallisierter Bereich 15 vorgesehen, der eine Kontaktfläche bzw. eine Leiterbahn bildet. Das Meßelement 7 sitzt mit einer
Stirnfläche auf diesem metallisierten Bereich 15 der
Folie 12 auf. Ebenfalls wird ihm die elektrische
Energie über diesen metallisierten Bereich zugeführt. Auf der gegenüberliegenden Stirnseite des
Meßelementes 7 sitzt genau wie bei der Ausführungsform gemäß Figur 1 eine Druckfeder 9, die mit einer
nicht dargestellten Kontaktfahne Verbindung hat.
Der Stromfluß erfolgt also über die Druckfeder 9,
das Meßelement 7 und dem metallisierten Bereich 15
der Folie 12.

- 8 -

0150477

- 8 -

In der Zeichnung ist als Meßelement ein temperaturabhängiges Widerstandselement verwandt. Es
versteht sich, daß dazu jedes geeignete temperaturabhängige Meßelement verwandt werden kann.

0150477

VDO Adolf Schindling AG    Gräfstraße 103
                          6000 Frankfurt/Main 90

                          G-R Kl-kmo / 1755

                          10. Januar 1984


Patentansprüche


1. Temperaturgeber mit einem temperaturabhängigen Meßelement in Form einer Scheibe, Pille oder dergleichen, das unter Zwischenschaltung einer Isolierschicht am Boden eines rohrförmigen Gebergehäuses
   angeordnet und mittels zweier Leiter mit zwei Anschlußkontakten des Temperaturgebers verbunden ist,
   dadurch gekennzeichnet, daß im Boden (2) des Gebergehäuses (1) eine von der das Meßelement (7) tragenden Isolierschicht (Keramikkörper 4, Folie 12)
   dichtend abgedeckte Öffnung (3) vorgesehen ist.


2. Temperaturgeber nach Anspruch 1, dadurch gekennzeichnet, daß die Isolierschicht ein Keramikkörper (4)
   ist, der auf seiner der Öffnung (3) abdeckenden Seite eine metallisierte Schicht (6) hat.


3. Temperaturgeber nach Anspruch 2, dadurch gekennzeichnet, daß der Keramikkörper (4) in den Boden (2) des
   Gebergehäuses eingelötet ist.


- 2 -

- 2 -

4. Temperaturgeber nach Anspruch 1 oder einem der folgenden, dadurch gekennzeichnet, daß der Keramikkörper (4) beidseitig eine metallisierte Schicht (5, 6) hat und als Leiter zwei koaxial zueinander angeordnete Druckfedern (9, 10) vorgesehen sind, von denen eine auf dem Meßelement (7) und die andere auf der innenseitigen Metallschicht (5) des Keramikkörpers (4) aufsitzt.

5. Temperaturgeber nach Anspruch 1 oder einem der folgenden, dadurch gekennzeichnet, daß das Meßelement (7) auf der metallisierten Schicht (5) des Keramikkörpers (4) festgelötet ist.

6. Temperaturgeber nach Anspruch 1 oder einem der folgenden, dadurch gekennzeichnet, daß die Isolierschicht durch eine Folie (12) gebildet ist, welche mit einem Bodenbereich (13) die Öffnung (3) abdeckt und mit einem Fortsatz (14) innenseitig am Gebergehäuse (1) hochgezogen ist und daß ein Leiter durch einen metallisierten Bereich (15) der Folie (12) gebildet ist, auf dem das Meßelement (7) aufsitzt und der zu einem Anschlußkontakt führt.

7. Temperaturgeber nach Anspruch 1 oder einem der folgenden, dadurch gekennzeichnet, daß die die Öffnung (3) abdeckende Folie (12) mit dem Rand der Öffnung (3) verklebt ist.

- 3 -

8. Temperaturgeber nach Anspruch 1 oder einem der
folgenden, <u>dadurch gekennzeichnet</u>, daß die Isolierschicht durch eine zumindest außenseitig
emaillierte Metallscheibe gebildet ist.

1/1

FIG.1

FIG.2

FIG.3